# EUROPEAN PATENT SPECIFICATION

(11) **EP 4 332 515 B1**
(45) Date of publication and mention of the grant of the patent: **01.10.2025**
(21) Application number: 21938586.1
(22) Date of filing: 10.05.2021
(51) Int. Cl.: G01D 18/00, G01D 21/02

(54) **DYNAMIC SAMPLING METHOD AND DEVICE FOR ANALOG SENSOR**
DYNAMISCHES ABTASTVERFAHREN UND VORRICHTUNG FÜR ANALOGSENSOR
PROCÉDÉ ET DISPOSITIF D'ÉCHANTILLONNAGE DYNAMIQUE POUR CAPTEUR ANALOGIQUE

(30) Priority: 30.04.2021 CN 202110485458
(43) Date of publication of application: 06.03.2024
(73) Proprietor: Shenzhen Guli Technology Co., Ltd., Shenzhen, Guangdong 518000 (CN)
(72) Inventor: YU, Hongyong, Shenzhen, Guangdong 518000 (CN)
(74) Representative: Ipey
(86) International application number: PCT/CN2021/092750
(87) International publication number: WO 2022/227113

(56) References cited:
- EP-A1- 3 594 693
- CN-A- 104 061 922
- CN-A- 104 375 435
- CN-A- 111 147 079
- CN-A- 111 505 389
- CN-A- 112 325 919
- CN-A- 112 325 919
- JP-A- 2014 002 595

## Description

### TECHNICAL FIELD

The present disclosure relates to a field of display technology, and in particular to a dynamic sampling method for an analog sensor and devices thereof.

### BACKGROUND

Currently, some analog sensors, such as Hall sensors, sliding rheostats, pressure sensors, capacitive position sensors, etc., commonly have errors in output values. On the one hand, there are individual differences in the analog sensors themselves, and on the other hand difference between external structures, such as housings or magnets where the analog sensors are installed, which jointly causes the errors in the output values.

In order to solve the problem, a conventional method is to set a relatively small and safe fixed value range to detect an output value of the analog quality sensor. Taking a sliding rheostat on a joystick of a game controller as an example, the sliding rheostat is installed on a shell of the game controller, and an actual output range of the sliding rheostat is normally 0.5V-2.7V. Taking into account the errors caused by individual difference in the sliding rheostat and the shell of the game controller, a sampling range of the sliding rheostat is limited to 0.7V-2.5V to prevent the joystick of the game controller from being unable to move to a maximum stroke to obtain a maximum actual output value. However, a limitation to the sampling range of the sliding rheostat affects user's control accuracy. Generally speaking, when the user moves the joystick, the actual output value of the sliding rheostat reaches a maximum actual output value, while the maximum stroke of the joystick is not reached, which brings a bad user experience to the user.

CN112325919 discloses a self-adaptive adjustment sensor system. The system comprises a sensor gauge outfit, a reading circuit used for reading an external physical signal of the sensor gauge outfit, converting the external physical signal into an analog electric signal and outputting the analog electric signal, a dynamic overload protection module used for carrying out overload protection processing on the part, exceeding a set sensor system range, of the analog electric signal and then outputting the part, carrying out threshold detection on the analog electric signal according to a set detection threshold range, judging whether the analog electric signal is within a detection threshold range or not, and if not, outputting an over-threshold signal, an analog-to-digital converter used for converting the analog electric signal output by the dynamic overload protection module into a digital signal to be output, and a digital signal processor used for resetting the detection threshold range and the sensor system range according to the over-threshold signal.

JP2014002595 discloses an operation device capable of obtaining output change in accordance with a tilt angle of an operation shaft in the vicinity of a neutral position. The device includes: a tiltable operation shaft; detection means that outputs a voltage value according to a tilt operation state of the operation shaft; an output circuit that outputs a control signal calculated on the basis of the voltage value detected by the detection means. The operation shaft has a neutral position area where the operation shaft is restored from the tilt operation by a restoration force. The output circuit consecutively changes an output for a return value on a positive side and an output for a return value on a negative side in the neutral position area and can set an output difference between the output for the return value on the positive side and the output for the return value on the negative side to be an arbitrary value.

Therefore, when collecting analog sensor data, how to overcome the errors in the output values caused by the individual differences thereof and installation position differences of the analog sensor without affecting the actual output range of the analog sensors is an urgent technical problem to be solved.

### SUMMARY

In accordance with the present invention there is provided a dynamic sampling method for an analog sensor, comprising:
a step S1: reading a preset sampling range, taking a minimum value of the preset sampling range as a minimum value of an actual sampling range, and taking a maximum value of the preset sampling range as a maximum value of the actual sampling range;
a step S2: sampling an output of the analog sensor to obtain an analog sample value;
a step S3: outputting an actual sample value according to a comparison result between the analog sample value and the actual sampling range;
wherein the step S3 comprises: comparing the analog sample value with the maximum value and the minimum value of the actual sampling range respectively; if the analog sample value is within the actual sampling range, taking the analog sample value as a sampling output value; if the analog sample value is less than the minimum value of the actual sampling range, taking the minimum value of the actual sampling range as the sampling output value; and if the analog sample value is greater than the maximum value of the actual sampling range, taking the maximum value of the actual sampling range as the sampling output value;
a step S4: adjusting the actual sampling range according to the comparison result between the analog sample value and the actual sampling range; and
a step S5: returning to execute the step S2.

Optionally, the step S4 comprises comparing the analog sample value with the maximum value and the minimum value of the actual sampling range respectively; if the analog sample value is within the actual sampling range, not adjusting the actual sampling range; if the analog sample value is less than the minimum value of the actual sampling range, updating the minimum value of the actual sampling range with the analog sample value; and if the analog sample value is greater than the maximum value of the actual sampling range, updating the maximum value of the actual sampling range with the analog sample value.

Optionally, the step S3 further comprises determining an actual output value according to the sampling output value, the actual sampling range, and the actual output range.

Optionally, a difference between the maximum value of the actual sampling range minus the minimum value of the actual sampling range is defined as an actual sampling range amplitude; a difference between a maximum value of the actual output range minus a minimum value of the actual output range is defines as an actual output range amplitude; a ratio of the sampling output value to the actual sampling range amplitude is equal to a ratio of the actual output value to the actual output range amplitude.

Optionally, the analog sensor is configured to collect a joystick status signal of a remote controller.

Optionally, the analog sensor is a Hall sensor, a sliding rheostat, a pressure sensor, or a capacitive position sensor.

Optionally, the analog sample value is a voltage value or a current value.

Also in accordance with the present invention there is provided a computer device, comprising:
a processor,
a memory, and
an analog sensor sampling device;
wherein the processor is configured to execute a computer program stored in the memory to implement the dynamic sampling method for the aforementioned analog sensor.

Also in accordance with the present invention there is provided a computer-readable storage medium, comprising: a computer program stored in the computer-readable storage medium;
wherein when the computer program is executed by a processor, the dynamic sampling method for the analog sensor of claim 1 is implemented.

In the dynamic sampling method for the analog sensor, by setting the preset sampling range, outputting the actual sample value according to the comparison result between the analog sample value and the actual sampling range, and adjusting the actual sampling range according to the comparison result between the analog sample value and the actual sampling range after the actual sample value is output, a dynamic adjustment of actual sampling range of the analog sensor is realized. Therefore, when the analog sample value exceeds the preset sampling range, the actual sampling range is timely and dynamically updated to ensure that all values within the actual output range of the analog sensor are collected to adapt to applications in different occasions.

Especially in an application of joystick status signal collection for the remote controller, by setting the preset sampling range, parameter comparison, dynamic adjustment and using a current value, when the analog sample value exceeds the preset sampling range, the actual sampling range is updated in real time. That is, a control range of the joystick of the remote controller controlled by the user is corrected without the user's awareness, avoiding voltage output errors caused by individual differences caused by mass production of different joysticks of different remote controllers, and ensuring remote control of the different remote controllers. Therefore, when each of the different joysticks of different remote controllers are controlled, each of the different joysticks is allowed to complete a whole stroke, which has high-precision and full-range use effects. Further, the present disclosure provides a relatively safe fixed preset sampling range value when replacing the remote controllers, which is conducive to choosing different remote controllers in a variety of ways.

### BRIEF DESCRIPTION OF DRAWINGS

FIG. 1 is a flow chart of a dynamic sampling method for an analog sensor according to a first embodiment of the present disclosure.
FIG. 2 is a flow chart of the dynamic sampling method for the analog sensor according to a second embodiment of the present disclosure.

### DETAILED DESCRIPTION

In order to explain technical solutions of the present disclosure clearly and completely, the present disclosure will be further described below in conjunction with the accompanying drawings.

### Embodiment 1

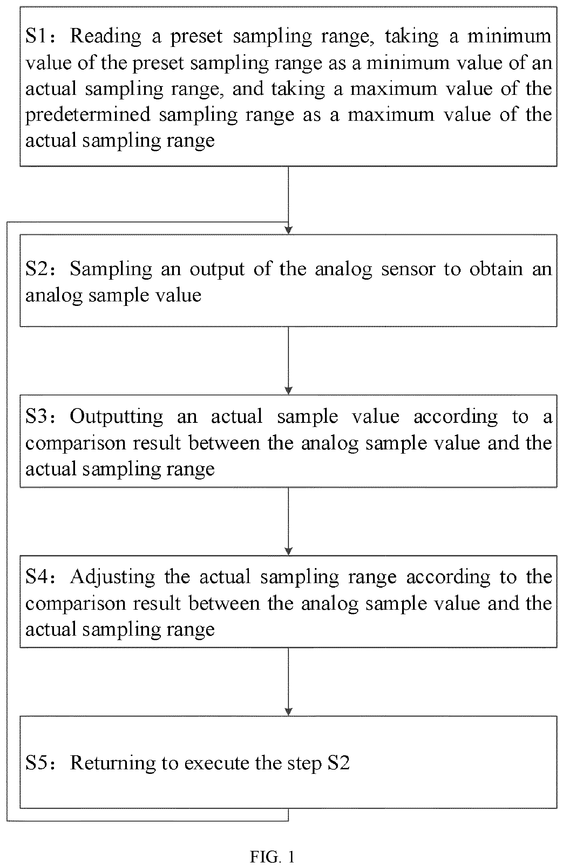

As shown in FIG. 1, in one embodiment, the present disclosure provides the dynamic sampling method for the analog sensor. The dynamic sampling method for the analog sensor comprises
a step S1: reading a preset sampling range, taking a minimum value of the preset sampling range as a minimum value of an actual sampling range, and taking a maximum value of the preset sampling range as a maximum value of the actual sampling range;
a step S2: sampling an output of the analog sensor to obtain an analog sample value;
a step S3: outputting an actual sample value according to a comparison result between the analog sample value and the actual sampling range;
a step S4: adjusting the actual sampling range according to the comparison result between the analog sample value and the actual sampling range; and
a step S5: returning to execute the step S2.

It should be noted that in the embodiment, the preset sampling range is stored in a non-volatile storage device. That is, data of the preset sampling range maintains even in an event of power failure. The preset sampling range is a relatively safe parameter range that is adapted to differences in an output range of the analog sensor caused by individual differences or differences in installation positions of different analog sensors installed on different housing structures. For example, a boundary of the preset sampling range may be within boundaries of output values of different analog sensors.

In the dynamic sampling method for the analog sensor, by setting the preset sampling range, outputting the actual sample value according to the comparison result between the analog sample value and the actual sampling range, and adjusting the actual sampling range according to the comparison result between the analog sample value and the actual sampling range after the actual sample value is output, a dynamic adjustment of actual sampling range of the analog sensor is realized. Therefore, when the analog sample value exceeds the preset sampling range, the actual sampling range is timely and dynamically updated to ensure that all values within the actual output range of the analog sensor are collected to adapt to applications in different occasions.

According to the invention, the step S3 comprises comparing the analog sample value with the maximum value and the minimum value of the actual sampling range respectively. If the analog sample value is within the actual sampling range, taking the analog sample value as a sampling output value. If the analog sample value is less than the minimum value of the actual sampling range, taking the minimum value of the actual sampling range as the sampling output value. If the analog sample value is greater than the maximum value of the actual sampling range, taking the maximum value of the actual sampling range as the sampling output value.

In one optional embodiment, the step S4 comprises: comparing the analog sample value with the maximum value and the minimum value of the actual sampling range respectively. If the analog sample value is within the actual sampling range, not adjusting the actual sampling range. If the analog sample value is less than the minimum value of the actual sampling range, updating the minimum value of the actual sampling range with the analog sample value. If the analog sample value is greater than the maximum value of the actual sampling range, updating the maximum value of the actual sampling range with the analog sample value.

In one optional embodiment, the step S3 further comprises determining an actual output value according to the sampling output value, the actual sampling range, and the actual output range.

In one optional embodiment, a difference between the maximum value of the actual sampling range minus the minimum value of the actual sampling range is defined as an actual sampling range amplitude. A difference between a maximum value of the actual output range minus a minimum value of the actual output range is defines as an actual output range amplitude. A ratio of the sampling output value to the actual sampling range amplitude is equal to a ratio of the actual output value to the actual output range amplitude.

It should be noted that, in the embodiment of the present disclosure, the actual output value is data transmitted to a subsequent device or a subsequent program after the analog sensor collects data of a joystick and adjusts the data of the joystick. By performing the dynamic sampling method in the embodiment, it is ensured that any value in an output value range of the analog sensor is mapped to the actual output range.

In one optional embodiment, the analog sensor is configured to collect a joystick status signal of a remote controller. The remote controller is a game controller, an aircraft controller, or other remote controls involved in control operations.

In one optional embodiment, the analog sensor is a Hall sensor, a sliding rheostat, a pressure sensor, or a capacitive position sensor.

In one optional embodiment, the analog sample value is a voltage value or a current value.

### Embodiment 2

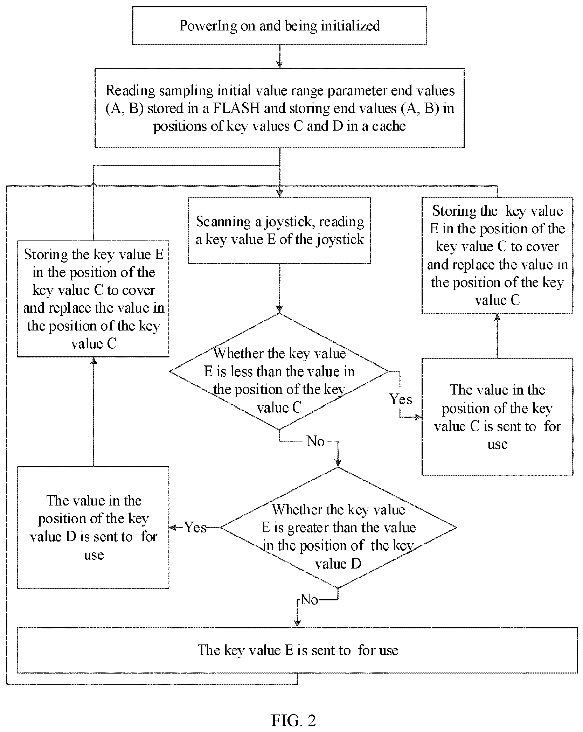

As shown in FIG. 2, the embodiment of the present disclosure provides the dynamic sampling method for the analog sensor applied in collecting joystick status of the remote control.

Specifically, when a data acquisition system or a data acquisition device is powered on and initialized, the data acquisition system or the data acquisition device reads sampling initial value range parameter end values (A, B) stored in a storage module (for example, a FLASH), and the sampling initial value range parameter end values are stored in a cache for use. At this time, the sampling initial value range parameter end value A is stored in a position of a key value C in the cache, and the sampling initial value range parameter end value B is stored in a position of a key value D in the cache. Then the joystick is scanned, and a key value E of the joystick is read.

In the embodiment, the key value E of the joystick is obtained by collecting the joystick status signal of the remote controller through the analog sensor. Thereafter, whether a value of the key value E of the joystick is less than a value in the position of the key value C (i.e., the end value A) in the cache is determined. If the value of the key value E of the joystick is less than the value in the position of the key value C in the cache, the value in the position of the key value C is sent to the remote controller for use, the value of the key value E is stored in the position of the key value C to cover and replace the value in the position of the key value C, and then returning to scan the joystick. If the value of the key value E of the joystick is not less than the value in the position of the key value C in the cache, whether the value of the key value E of the joystick is greater than a value in the position of the key value D (i.e., the end value B) in the cache is determined. If the value of the key value E of the joystick is greater than the value in the position of the key value D in the cache, the value in the position of the key value D is sent to the remote controller for use, the value of the key value E is stored in the cache to replaces the value in the position of the key value D, and then returning to scan the joystick. If the value of the key value E of the joystick is no more than the value in the position of the key value D in the cache, the he value of the key value E is sent to the remote controller for use. If power is turned off and then turned on again, the data acquisition system or the data acquisition device returns to an initial state.

Taking the joystick of the game controller adopting the sliding rheostat as an example, a sampling initial value range (i.e., the preset sampling range) of the sliding rheostat is 0.7-2.5 V. When in use, if a sampling voltage ranges from 0.5 -3 V (i.e., the analog sample value), the actual sampling range is dynamically adjusted to 0.5-3 V until the power is off. After the sliding rheostat is powered on again, the sample initial value range is restored to 0.7-2.5 V. If the sampling voltage range of the sliding rheostat is 0.8-2.4 V, the sample initial value range of the sliding rheostat ranging from 0.7-2.5 V is served as the actual sampling range. If the sampling voltage range is 0.8-2.8 V in use, the actual sampling range is dynamically adjusted to 0.7-2.8 V, and if the sampling voltage range is 0.5-2.4 V in use, the actual sampling range is dynamically adjusted to 0.5-2.5 V

By setting the preset sampling range, parameter comparison, dynamic adjustment and using a current value, when the analog sample value exceeds the preset sampling range, the actual sampling range is updated in real time. That is, a control range of the joystick of the remote controller controlled by the user is corrected without the user's awareness, avoiding voltage output errors caused by individual differences caused by mass production of different joysticks of different remote controllers, and ensuring remote control of the different remote controllers. Therefore, when each of the different joysticks of different remote controllers are controlled, each of the different joysticks is allowed to complete a whole stroke, which has high-precision and full-range use effects. Further, the present disclosure provides a relatively safe fixed preset sampling range value when replacing the remote controllers, which is conducive to choosing different remote controllers in a variety of ways.

In addition, embodiments of the present disclosure further provides a computer device. The computer device comprises a processor, a memory, and an analog sensor sampling device. The processor is configured to execute a computer program stored in the memory to implement the dynamic sampling method for the analog sensor mentioned above.

The computer device may be a personal computer, an industrial personal computer, a microcontroller, a microprocessor, etc. The analog sensor sampling device may be an A/D converter, a modular analog acquisition unit or a data acquisition card, etc.

It is understood by those skilled in the art that all or parts of processes in the dynamic sampling method mentioned in the foregoing embodiments is able to be completed by controlling related hardware by a computer program, the computer program may be stored in a computer-readable storage medium. When executing the dynamic sampling method, the computer program executes the steps mentioned in embodiments of the dynamic sampling method. The computer-readable storage medium may be a magnetic disk, an optical disk, a read-only memory (ROM), a random access memory (RAM), a hard disk, a USB flash disk, a FLASH, etc.

## Claims

1. A dynamic sampling method for an analog sensor, comprising:
a step S1: reading a preset sampling range, taking a minimum value of the preset sampling range as a minimum value of an actual sampling range, and taking a maximum value of the preset sampling range as a maximum value of the actual sampling range;
a step S2: sampling an output of the analog sensor to obtain an analog sample value;
a step S3: outputting an actual sample value according to a comparison result between the analog sample value and the actual sampling range;
wherein the step S3 comprises: comparing the analog sample value with the maximum value and the minimum value of the actual sampling range respectively; if the analog sample value is within the actual sampling range, taking the analog sample value as a sampling output value; if the analog sample value is less than the minimum value of the actual sampling range, taking the minimum value of the actual sampling range as the sampling output value; and if the analog sample value is greater than the maximum value of the actual sampling range, taking the maximum value of the actual sampling range as the sampling output value;
a step S4: adjusting the actual sampling range according to the comparison result between the analog sample value and the actual sampling range; and
a step S5: returning to execute the step S2.

2. The dynamic sampling method for the analog sensor of claim 1, wherein the step S4 comprises comparing the analog sample value with the maximum value and the minimum value of the actual sampling range respectively; if the analog sample value is within the actual sampling range, not adjusting the actual sampling range; if the analog sample value is less than the minimum value of the actual sampling range, updating the minimum value of the actual sampling range with the analog sample value; and if the analog sample value is greater than the maximum value of the actual sampling range, updating the maximum value of the actual sampling range with the analog sample value.

3. The dynamic sampling method for the analog sensor of claims 1 or 2, wherein the step S3 further comprises determining an actual output value according to the sampling output value, the actual sampling range, and the actual output range.

4. The dynamic sampling method for the analog sensor of claim 3, wherein a difference between the maximum value of the actual sampling range minus the minimum value of the actual sampling range is defined as an actual sampling range amplitude; a difference between a maximum value of the actual output range minus a minimum value of the actual output range is defines as an actual output range amplitude; a ratio of the sampling output value to the actual sampling range amplitude is equal to a ratio of the actual output value to the actual output range amplitude.

5. The dynamic sampling method for the analog sensor of claim 1, wherein the analog sensor is configured to collect a joystick status signal of a remote controller.

6. The dynamic sampling method for the analog sensor of claim 1, wherein the analog sensor is a Hall sensor, a sliding rheostat, a pressure sensor, or a capacitive position sensor.

7. The dynamic sampling method for the analog sensor of claim 1, wherein the analog sample value is a voltage value or a current value.

8. A computer device, comprising:
a processor,
a memory, and
an analog sensor sampling device;
wherein the processor is configured to execute a computer program stored in the memory to implement the dynamic sampling method for the analog sensor of claim 1.

9. A computer-readable storage medium, comprising: a computer program stored in the computer-readable storage medium;
wherein when the computer program is executed by a processor, the dynamic sampling method for the analog sensor of claim 1 is implemented.

## Patentansprüche

1. Dynamisches Abtastverfahren für einen analogen Sensor, umfassend:
Schritt S1: Lesen eines voreingestellten Abtastbereichs, Festlegen eines Mindestwerts des voreingestellten Abtastbereichs als Mindestwert des tatsächlichen Abtastbereichs und Festlegen eines Maximalwerts des voreingestellten Abtastbereichs als Maximalwert des tatsächlichen Abtastbereichs;
Schritt S2: Abtasten eines Ausgangs des analogen Sensors, um einen analogen Abtastwert zu erhalten;
Schritt S3: Ausgeben eines tatsächlichen Abtastwerts gemäß einem Vergleichsergebnis zwischen dem analogen Abtastwert und dem tatsächlichen Abtastbereich;
wobei der Schritt S3 umfasst: Vergleichen des analogen Abtastwerts jeweils mit dem Maximalwert und dem Minimalwert des tatsächlichen Abtastbereichs; wenn der analoge Abtastwert innerhalb des tatsächlichen Abtastbereichs liegt, Verwenden des analogen Abtastwerts als Abtastausgabewert; wenn der analoge Abtastwert kleiner ist als der Mindestwert des tatsächlichen Abtastbereichs, Verwenden des Mindestwerts des tatsächlichen Abtastbereichs als Abtastausgabewert; und wenn der analoge Abtastwert größer ist als der Maximalwert des tatsächlichen Abtastbereichs, Verwenden des Maximalwerts des tatsächlichen Abtastbereichs als Abtastausgabewert;
Schritt S4: Anpassen des tatsächlichen Abtastbereichs gemäß dem Vergleichsergebnis zwischen dem analogen Abtastwert und dem tatsächlichen Abtastbereich; und
Schritt S5: Zurückkehren, um den Schritt S2 auszuführen.

2. Dynamisches Abtastverfahren für einen analogen Sensor nach Anspruch 1, wobei der Schritt S4 umfasst: Vergleichen des analogen Abtastwerts jeweils mit dem Maximalwert und dem Minimalwert des tatsächlichen Abtastbereichs; wenn der analoge Abtastwert innerhalb des tatsächlichen Abtastbereichs liegt, nicht Anpassen des tatsächlichen Abtastbereichs; wenn der analoge Abtastwert kleiner ist als der Mindestwert des tatsächlichen Abtastbereichs, Aktualisieren des Mindestwerts des tatsächlichen Abtastbereichs mit dem analogen Abtastwert; und wenn der analoge Abtastwert größer ist als der Maximalwert des tatsächlichen Abtastbereichs, Aktualisieren des Maximalwerts des tatsächlichen Abtastbereichs mit dem analogen Abtastwert.

3. Dynamisches Abtastverfahren für einen analogen Sensor nach Anspruch 1 oder 2, wobei der Schritt S3 ferner umfasst: Bestimmen eines tatsächlichen Ausgangswerts gemäß dem Abtastausgangswert, dem tatsächlichen Abtastbereich und dem tatsächlichen Ausgangsbereich.

4. Dynamisches Abtastverfahren für einen analogen Sensor gemäß Anspruch 3, wobei eine Differenz zwischen dem Maximalwert des tatsächlichen Abtastbereichs und dem Minimalwert des tatsächlichen Abtastbereichs als tatsächliche Abtastbereichsamplitude definiert wird; eine Differenz zwischen einem Maximalwert des tatsächlichen Ausgangsbereichs und einem Minimalwert des tatsächlichen Ausgangsbereichs als tatsächliche Ausgangsbereichsamplitude definiert wird; ein Verhältnis des Abtastausgangswerts zur tatsächlichen Abtastbereichsamplitude gleich einem Verhältnis des tatsächlichen Ausgangswerts zur tatsächlichen Ausgangsbereichsamplitude ist.

5. Dynamisches Abtastverfahren für einen analogen Sensor gemäß Anspruch 1, wobei der analoge Sensor konfiguriert ist, ein Joystick-Statussignal eines Fernsteuergeräts zu erfassen.

6. Dynamisches Abtastverfahren für einen analogen Sensor gemäß Anspruch 1, wobei der analoge Sensor ein Hall-Sensor, ein Schiebewiderstand, ein Drucksensor oder ein kapazitiver Positionssensor ist.

7. Dynamisches Abtastverfahren für einen analogen Sensor gemäß Anspruch 1, wobei der analoge Abtastwert ein Spannungswert oder ein Stromwert ist.

8. Computergerät, umfassend:
einen Prozessor,
ein Speicher, und
eine Abtastvorrichtung für einen analogen Sensor;
wobei der Prozessor dazu konfiguriert ist, ein im Speicher gespeichertes Computerprogramm auszuführen, um das dynamische Abtastverfahren für einen analogen Sensor gemäß Anspruch 1 implementieren.

9. Computerlesbares Speichermedium, umfassend: ein Computerprogramm, das im computerlesbaren Speichermedium gespeichert ist; wobei, wenn das Computerprogramm von einem Prozessor ausgeführt wird, das dynamische Abtastverfahren für einen analogen Sensor gemäß Anspruch 1 implementiert wird.

## Revendications

1. Procédé d'échantillonnage dynamique pour un capteur analogique, comprenant :
étape S1 : lire une plage d'échantillonnage prédéfinie, prendre une valeur minimale de la plage d'échantillonnage prédéfinie comme valeur minimale d'une plage d'échantillonnage réelle, et prendre une valeur maximale de la plage d'échantillonnage prédéfinie comme valeur maximale de la plage d'échantillonnage réelle ;
étape S2 : échantillonner une sortie du capteur analogique pour obtenir une valeur d'échantillon analogique ;
étape S3 : fournir une valeur d'échantillon réelle en fonction d'un résultat de comparaison entre la valeur d'échantillon analogique et la plage d'échantillonnage réelle ;
dans lequel l'étape S3 comprend : comparer la valeur d'échantillon analogique avec la valeur maximale et la valeur minimale de la plage d'échantillonnage réelle, respectivement ; si la valeur d'échantillon analogique se situe dans la plage d'échantillonnage réelle, prendre la valeur d'échantillon analogique comme valeur de sortie d'échantillonnage ; si la valeur d'échantillon analogique est inférieure à la valeur minimale de la plage d'échantillonnage réelle, prendre la valeur minimale de la plage d'échantillonnage réelle comme valeur de sortie d'échantillonnage ; et si la valeur d'échantillon analogique est supérieure à la valeur maximale de la plage d'échantillonnage réelle, prendre la valeur maximale de la plage d'échantillonnage réelle comme valeur de sortie d'échantillonnage ;
étape S4 : ajuster la plage d'échantillonnage réelle en fonction du résultat de comparaison entre la valeur d'échantillonnage analogique et la plage d'échantillonnage réelle ; et
étape S5 : revenir pour exécuter l'étape S2.

2. Procédé d'échantillonnage dynamique pour le capteur analogique selon la revendication 1, dans lequel l'étape S4 comprend : comparer la valeur d'échantillon analogique avec la valeur maximale et la valeur minimale de la plage d'échantillonnage réelle, respectivement ; si la valeur d'échantillon analogique se situe dans la plage d'échantillonnage réelle, non ajuster la plage d'échantillonnage réelle ; si la valeur d'échantillon analogique est inférieure à la valeur minimale de la plage d'échantillonnage réelle, mettre à jours la valeur minimale de la plage d'échantillonnage réelle avec la valeur d'échantillon analogique ; et si la valeur d'échantillon analogique est supérieure à la valeur maximale de la plage d'échantillonnage réelle, mettre à jours la valeur maximale de la plage d'échantillonnage réelle avec la valeur d'échantillon analogique.

3. Procédé d'échantillonnage dynamique pour le capteur analogique selon les revendications 1 ou 2, dans lequel l'étape S3 comprend en outre déterminer une valeur de sortie réelle en fonction de la valeur de sortie d'échantillonnage, de la plage d'échantillonnage réelle et de la plage de sortie réelle.

4. Procédé d'échantillonnage dynamique pour le capteur analogique selon la revendication 3, dans lequel une différence entre la valeur maximale de la plage d'échantillonnage réelle et la valeur minimale de la plage d'échantillonnage réelle est définie comme amplitude de plage d'échantillonnage réelle ; une différence entre une valeur maximale de la plage de sortie réelle et une valeur minimale de la plage de sortie réelle est définie comme amplitude de plage de sortie réelle ; un rapport de la valeur de sortie d'échantillonnage à l'amplitude de plage de sortie réelle est égal à un rapport de la valeur de sortie réelle à l'amplitude de plage de sortie réelle.

5. Procédé d'échantillonnage dynamique pour le capteur analogique selon la revendication 1, dans lequel le capteur analogique est configuré pour collecter un signal d'état d'une manette de jeu d'un contrôleur à distance.

6. Procédé d'échantillonnage dynamique pour le capteur analogique selon la revendication 1, dans lequel le capteur analogique est un capteur à effet Hall, un rhéostat coulissant, un capteur de pression ou un capteur de position capacitif.

7. Procédé d'échantillonnage dynamique pour le capteur analogique selon la revendication 1, dans lequel la valeur d'échantillon analogique est une valeur de tension ou une valeur de courant.

8. Dispositif informatique, comprenant :
un processeur,
une mémoire, et
un dispositif d'échantillonnage à capteur analogique ;
dans lequel le processeur est configuré pour exécuter un programme informatique stocké dans la mémoire afin de mettre en œuvre le procédé d'échantillonnage dynamique pour le capteur analogique selon la revendication 1.

9. Support de stockage lisible par ordinateur, comprenant : un programme informatique stocké sur le support de stockage lisible par ordinateur ;
dans lequel, lorsque le programme informatique est exécuté par un processeur, le procédé d'échantillonnage dynamique pour le capteur analogique selon la revendication 1 est mise en œuvre.
